# EUROPÄISCHE PATENTANMELDUNG

(11) **EP 4 697 179 A2**
(43) Veröffentlichungstag der Anmeldung: **18.02.2026**
(21) Anmeldenummer: 25188169.4
(22) Anmeldetag: 08.07.2025
(51) Int. Cl.: G06F 11/3668

(54) **COMPUTER-IMPLEMENTIERTES VERFAHREN ZUM GENERIEREN VON TESTSZENARIEN ZUM TESTEN VON EINEM TECHNISCHEN SYSTEM**

(30) Priorität: 01.08.2024 DE 102024207302
(71) Anmelder: Siemens Aktiengesellschaft, 80333 München (DE)
(72) Erfinder: Zeller, Marc, 81243 München (DE)
(74) Vertreter: Siemens Patent Attorneys

(57) **Zusammenfassung**

Die Erfindung betrifft ein computer-implementiertes Verfahren zum Generieren von Testszenarien zum Testen von einem technischen System, umfassend die Schritte a. Bereitstellen eines Suchraums (10) (S1); wobei der Suchraum (10) durch einen Betriebs-Design-Bereich (20), ODD, definiert ist; wobei der Betriebs-Design-Bereich (20) eine Mehrzahl von Elementen (22) aufweist; wobei das technische System in dem Betriebs-Design-Bereich (20) betrieben wird; b. Generieren mindestens eines ersten Testszenarios auf Basis des Suchraums (10) (S2); wobei das mindestens eine erste Testszenario mindestens ein erstes Element der Mehrzahl der Elemente des Betriebs-Design-Bereichs (20), ODD, aufweist; wobei das mindestens eine erste Testszenario mindestens eine entsprechende Dimension (12) des Suchraums (10) untersucht; c. Generieren mindestens eines zugehörigen ersten Testergebnisses durch Ausführen des mindestens einen ersten Testszenarios (S3); d. Evaluieren des mindestens einen zugehörigen ersten Testergebnisses (S4); e. Generieren mindestens eines weiteren Testszenarios auf Basis des Suchraums (10) unter Berücksichtigung der Evaluierung (S5); f. Wiederholen der Schritte c. bis d. mit dem mindestens einen weiteren Testszenario und e. bis der Suchraum (10) erschöpft ist (S6); und g. Bereitstellen des mindestens einen ersten Testszenarios, des mindestens einen weiteren Testszenarios und/oder der entsprechenden Testergebnisse (S7).

Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Generieren von Testszenarien zum Testen von einem technischen System. Ferner ist die Erfindung auf ein entsprechendes technisches System und ein Computerprogrammprodukt gerichtet.

### 2. Stand der Technik

Das autonome Fahren gewinnt zunehmend an Bedeutung. Diverse autonome Fahrzeuge, wie Autos und Züge, sind in diesem Zusammenhang aus dem Stand der Technik bekannt. Der Automatisierungsgrad nimmt ebenfalls erblich zu.

Die autonomen Fahrzeuge sind dazu eingerichtet zumindest weitgehend fahrerlos betrieben zu werden. Im Zuge der Weiterentwicklung der autonomen Fahrzeuge wird die Steuerung Schritt für Schritt vom Fahrzeugführer auf ein technisches System mit automatisierter Steuerung übertragen. Eine zuverlässige automatisierte Hinderniserkennung und die Einleitung entsprechender Gegenmaßnahmen, wie eine Schnellbremsung, stellen bis heute eine große Herausforderung dar.

Weiterhin basieren die autonomen Fahrzeuge sowie die meisten andere sicherheitskritischen technischen Systeme zunehmend auf maschinellem Lernen. Mit anderen Worten sind die technische Systeme Künstliche Intelligenz (kurz Kl)-basiert. Gemäß dem Stand der Technik gibt es jedoch bislang keine Garantie dafür, dass die Objektklassifizierung und/oder die Objekterkennung durch das zugrundeliegende Machine-Learning-Modell der technischen Systeme auch korrekt ist. Andernfalls kommt es durch die fehlerhafte Klassifizierung und folglich auch Steuerung zu Gefahrensituationen, im schlimmsten Fall verletzten Personen.

Aus diesen Gründen sind Abdeckungsmetriken für das Testen der technischen Systeme und deren Software von entscheidender Bedeutung. Die Abdeckungsmetriken sind dabei erforderlich, um zu ermitteln, ob die Software der technischen Systeme ausreichend getestet wird. Herkömmliche Abdeckungsmetriken sind jedoch nicht hinreichend auf die Kl-basierten technischen Systeme anwendbar. Eine Herausforderung besteht darin eine Abdeckungsmetrik bereitzustellen, mit der beurteilt werden kann, ob und wie vollständig eine Reihe von Testszenarien einen Betriebs-Design-Bereich (engl. "Operational Design Domain", kurz ODD) abdeckt.

Die vorliegende Erfindung stellt sich daher die Aufgabe ein computer-implementiertes Verfahren zum Generieren von Testszenarien zum Testen von einem technischen System bereitzustellen, welches effizienter und zuverlässiger ist.

### 3. Zusammenfassung der Erfindung

Die oben genannte Aufgabe wird erfindungsgemäß durch ein computer-implementiertes Verfahren zum Generieren von Testszenarien zum Testen von einem technischen System gelöst, umfassend die Schritte
a. Bereitstellen eines Suchraums; wobei
   der Suchraum durch einen Betriebs-Design-Bereich definiert ist; wobei der Betriebs-Design-Bereich eine Mehrzahl von Elementen aufweist; wobei das technische System in dem Betriebs-Design-Bereich betrieben wird;
b. Generieren mindestens eines ersten Testszenarios auf Basis des Suchraums; wobei
   das mindestens eine erste Testszenario mindestens ein erstes Element der Mehrzahl der Elemente des Betriebs-Design-Bereichs aufweist; wobei das mindestens eine erste Testszenario mindestens eine entsprechende Dimension des Suchraums untersucht;
c. Generieren mindestens eines zugehörigen ersten Testergebnisses durch Ausführen des mindestens einen ersten Testszenarios;
d. Evaluieren des mindestens einen zugehörigen ersten Testergebnisses;
e. Generieren mindestens eines weiteren Testszenarios auf Basis des Suchraums unter Berücksichtigung der Evaluierung;
f. Wiederholen der Schritte c. bis d. mit dem mindestens einen weiteren Testszenario und e. bis der Suchraum erschöpft ist; und
g. Bereitstellen des mindestens einen ersten Testszenarios, des mindestens einen weiteren Testszenarios und/oder der entsprechenden Testergebnisse.

Dementsprechend ist die Erfindung auf ein computer-implementiertes Verfahren zum Generieren von Testszenarien zum Testen von einem technischen System gerichtet. Mit anderen Worten werden Testszenarien erzeugt, welche auf das technische System angewendet werden, um dieses zu testen. Der Begriff "Testszenario" ist dabei im herkömmlichen Sinn auszulegen. Dementsprechend ist ein "Testszenario" eine detaillierte Beschreibung einer Testbedingung oder eines Anwendungsfall, unter dem das technische System getestet werden soll. Das technische System kann dabei als ein beliebiges technisches System ausgebildet sein, wie ein sicherheitskritisches technisches System, beispielsweise ein autonomes Fahrzeug oder eine industrielle Anlage.

Im ersten Verfahrensschritt wird der Suchraum bereitgestellt. Der Suchraum steht dabei mit einem Systemkontext in Beziehung, nämlich dem sogenannten Betriebs-Design-Bereich (engl. "Operational Design Domain", kurz ODD). Der ODD weist üblicherweise eine Mehrzahl von Elementen auf. Die Elemente können auch als Merkmale oder Eigenschaften ausgelegt werden, wie Betriebszustände. Beispielhafte Betriebszustände sind Wetterbedingungen, die Sichtweite und die Tageszeit etc. bei autonomen Fahrzeugen.

Die Eingabedaten können über eine oder mehrere Eingabeschnittstellen empfangen werden. Zusätzlich oder alternativ können die Ausgabedaten auch über eine oder mehrere Ausgabeschnittstellen gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Die Daten können bidirektional ausgetauscht werden ohne Datenstau.

Im zweiten Verfahrensschritt wird der Suchraum verwendet, um das erste Testszenario zu erzeugen. Das erste Testszenario durchsucht die entsprechende Dimension des Suchraums. Die Elemente des ODD stehen mit den Dimensionen des Suchraums in Beziehung. Falls das erste Testszenario ein erstes Element oder zwei erste Elemente aufweist, untersucht das erste Testszenario auch die eine erste Dimension oder die zwei ersten Dimensionen des Suchraums. In einem weiteren Verfahrensschritt wird das erste Testszenario ausgeführt. Daraus resultiert das erste Testergebnis, welches weiterhin evaluiert wird.

In einem weiteren Verfahrensschritt wird der Suchraum erneut verwendet, um das weitere Testszenario zu erzeugen. In diesem Schritt wird die vorherige erfolgte Evaluierung berücksichtigt. Das weitere Testszenario kann auch als zweites Testszenario ausgelegt werden.

Die obigen Verfahrensschritte werden mit diesem weiteren Testszenario wiederholt solange bis der Suchraum erschöpft ist. Unter Erschöpfung ist zu verstehen, dass der Suchraum vollständig durchsucht wurde und mit anderen Worten jede Dimension des Suchraums bereits evaluiert wurde.

Im letzten Verfahrensschritt wird ein Testszenario, mehrere Testszenarien, ein Testergebnis und/oder die entsprechenden Testergebnisse bereitgestellt.

Mit anderen Worten geht das Verfahren iterativ durch den Suchraum, den das ODD überspannt. In einem Closed-Loop-Ansatz werden Testszenarien automatisch generiert, in einer (simulierten) Testumgebung ausgeführt, die Testergebnisse nach der Ausführung evaluiert und basierend auf den Ergebnissen auch neue Testszenarien erstellt.

Die vorliegende Erfindung stellt dadurch sicher, dass Testszenarien effizient und zuverlässig ermittelt werden. Mit Hilfe der Testszenarien kann das zugrundeliegende technische somit auch auf effiziente und zuverlässige Art und Weise getestet werden. Dadurch wird gewährleistet, dass das technische System in seinem ODD sicher betrieben wird.

Mit anderen Worten wird eine Abdeckungsmetrik bereitgestellt, mit der beurteilt werden kann, wie vollständig eine Reihe von Testszenarien einen ODD abdeckt.

Die meisten technischen Systeme verwenden üblicherweise Maschinelles Lernen bzw. sind Klbasiert. Folglich kann festgestellt werden, welche Testszenarien mit solchen technischen Systemen bewältigt werden können oder nicht.

Ein weiterer Vorteil des Verfahrens liegt darin, dass es die systematische Abdeckung des vom ODD während des Tests definierten Suchraums und das automatisierte Testen der technischen Systeme ermöglicht. Das Verfahren ist weiterhin vorteilhafterweise für simulations-basierte Software-in-the-Loop- oder Hardware-in-the-Loop-Tests geeignet und funktioniert mit komplexen ODD-Definitionen.

Sofern nicht anders angegeben, können alle Verfahrensschritte des computerimplementierten Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Verfahrensschritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Das technische System kann beispielsweise eine Maschine oder Anlage oder mehrere physisch, virtuell und/oder funktional verbundene Maschinen und/oder Anlagen beinhalten. Beispiel-hafte aber nicht beschränkende Anwendungsgebiete sind Systeme im Bereich der Energietechnik, etwa Anlagen und/oder Maschinen zur Energieerzeugung, zur Energieumwandlung und/oder zum Energietransport. Weitere nicht beschränkende Anwendungsgebiete liegen im Bereich der Mobilität, etwa im Eisenbahnverkehr, sodass das System beispielsweise Zugkomponenten, Zugmaschinen, Gleisanlagen oder Teile davon, Personenkraftwagen, Lastkraftwagen und so weiter beinhalten kann, im Bereich der Industrieproduktion, sodass das System beispielsweise Produktionsmaschinen oder -anlagen, Fertigungsmaschinen oder -anlagen, Testvorrichtungen, Überwachungsanlagen, Fördermaschinen oder -anlagen, verfahrenstechnische Anlagen und so weiter beinhalten kann. Weitere nicht beschränkende Anwendungsgebiete liegen im Bereich der Medizintechnik, so dass das System beispielsweise Vorrichtungen zur medizinischen Bildgebung, etwa MRT-Systeme, röntgenbasierte Bildgebungssysteme wie zum Beispiel CT-Systeme, ultraschallbasierte Bildgebungssysteme, PET-Systeme und so weiter beinhalten kann. Das System kann auch eines oder mehrere Robotersysteme beinhalten.

In einer Ausgestaltung weist der Suchraum mehrere Dimensionen auf und/oder die Anzahl der Dimensionen stimmt mit der Anzahl der Elemente des Betriebs-Design-Bereichs, ODD, überein. Dementsprechend weist das ODD eine Mehrzahl von Elementen auf und der Suchraum weist eine Mehrzahl von Dimensionen auf. Weist das ODD n Elemente auf, hat der Suchraum entsprechend n Dimensionen.

In einer weiteren Ausgestaltung ist jede Dimension durch eine Aufzählung, eine Ganzzahl, eine Zahl, eine reelle Zahl oder einen Bereich definiert. Dementsprechend wird jede Dimension im Suchraum vordefiniert.

In einer weiteren Ausgestaltung umfasst das Ausführen des mindestens einen ersten Testszenarios und/oder das Ausführen des mindestens einen weiteren Testszenarios, jeweils das Anwenden des mindestens einen ersten Testszenarios auf das technische System und/oder das Anwenden des mindestens einen weiteren Testszenarios auf das technische System. Das Testszenario wird ausgeführt indem es auf das technische System angewendet wird. Mit anderen Worten wird das technische System mit Hilfe des Testszenarios getestet. Das Testszenario weist ein oder mehrere Elemente des ODDs auf.

Beispielsweise wird das autonome Fahrzeug in seinem Testszenario und somit generierten ODD betrieben. Das autonome Fahrzeug klassifiziert beispielsweise Datenelemente wie Bilddaten, Textdaten oder Videodaten. Mit anderen Worten erfolgt eine Objektklassifizierung durch das autonome Fahrzeug in dem ODD mittels Maschinellem Lernen. Das Testergebnis im diesem Beispiel kann eine Liste mit klassifizierten Objekten aufweisen.

In einer weiteren Ausgestaltung weist das Evaluieren des mindestens einen ersten Testergebnisses und/oder des mindestens einen weiteren Testergebnisses weiterhin auf
- Vergleichen des mindestens einen ersten Testergebnisses und/oder des mindestens einen weiteren Testergebnisses mit mindestens einem erwarteten Testergebnis; und
- Bestimmen, ob das technische System in dem mindestens einen ersten Testszenario und/oder mindestens einen weiteren Testszenario unter Berücksichtigung des Vergleichs richtig betrieben wird.

Dementsprechend wird das Testergebnis mit einem erwarteten Testergebnis (engl. auch "Ground Trouth") verglichen. Das erwartete Testergebnis ist mit anderen Worten ein Referenzergebnis. Die Testergebnisse können zumindest teilweise oder vollständig miteinander übereinstimmen oder auch teilweise oder vollständig voneinander abweichen. Der Vergleich wird verwendet, um zu ermitteln, ob das technische System in dem Testszenario richtig betrieben wird.

In einer weiteren Ausgestaltung wird das technische System in dem mindestens einen ersten Testszenario und/oder mindestens einen weiteren Testszenario richtig betrieben und/oder war die Ausführung des mindestens einen Testszenarios erfolgreich, falls das mindestens eine erste Testergebnis und/oder das mindestens eine weitere Testergebnis mit dem erwarteten Testergebnis vollständig oder zumindest teilweise übereinstimmt. Stimmen die Testergebnisse dementsprechend vollständig oder zumindest zum Teil überein, deutet dies darauf hin, dass das technische System in dem Testszenario sicher betrieben wird. In diesem Fall, der Übereinstimmung, war die Ausführung des Testszenarios dementsprechend auch erfolgreich. Im anderen Fall, war die Ausführung des Testszenarios nicht erfolgreich und ist folglich fehlgeschlagen.

In einer weiteren Ausgestaltung weist das mindestens eine weitere Testszenario mindestens ein weiteres Element der Mehrzahl der Elemente des Betriebs-Design-Bereichs auf bei erfolgreicher Ausführung des mindestens einen ersten oder weiteren Testszenarios; wobei das weitere Testszenario mindestens eine weitere Dimension des Suchraums untersucht.

Demensprechend kann bei erfolgreicher Ausführung des Testszenarios der Suchraums und somit auch das Testszenario um eine oder mehrere Dimensionen erweitert werden. Die Erweiterung resultiert folglich in einem erweiterten Testszenario. Mit anderen Worten handelt es sich in diesem Fall bei dem weiteren Testszenario um ein erweitertes Testszenario, welches im Vergleich zum anderen Testszenario komplexer bzw. schwieriger ist.

In einer weiteren Ausgestaltung weist das mindestens eine weitere Testszenario ein weiteres Element der Mehrzahl der Elemente des Betriebs-Design-Bereichs auf bei fehlgeschlagener Ausführung des mindestens einen ersten oder weiteren Testszenarios; wobei
das weitere Testszenario genau eine Dimension des Suchraums untersucht; wobei sich das mindestens eine Element des ersten Testszenarios oder weiteren Testszenarios vom weiteren Element unterscheidet.

Demensprechend, kann bei fehlgeschlagener Ausführung des Testszenarios der Suchraum und somit auch das Testszenario nicht um Dimensionen erweitert werden. Sondern das weitere Testszenario durchsucht genau eine Dimension des Suchraums. Folglich wird sichergestellt, dass exakt oder genau eine Dimension betrachtet wird und nicht mehrere Dimensionen. Bei diesem weiteren Testszenario handelt es sich somit im Vergleich zum ersten Testszenario um ein vereinfachtes oder einfacheres Testszenario. Die Elemente unterscheiden sich zwischen dem ersten und dem weiteren Testszenario.

In einer weiteren Ausgestaltung weist das computer-implementierte Verfahren weiterhin auf Freigeben des technischen Systems für den Betrieb und/oder Verwerfen in Abhängigkeit des mindestens einen ersten Testszenarios, des mindestens einen weiteren Testszenarios und/oder der entsprechenden Testergebnisse. Demensprechend erfolgt eine Freigabe oder eine Ablehnung des technischen Systems. Die Grundlage hierfür können die Testszenarien sein oder deren Ergebnisse. Bei erfolgreicher Ausführung des Testszenarios, kann dieses freigegeben werden und auch das technische System. Bei fehlgeschlagener Ausführung des Testszenarios, kann dieses hingegeben nicht freigegeben werden und das technische System wird verworfen bzw. abgelehnt. Das technische System kann daraufhin auch weiter getestet und/oder angepasst werden bei fehlgeschlagener Freigabe.

In einer weiteren Ausgestaltung weist das computer-implementierte Verfahren weiterhin auf
- Ausgeben des mindestens einen ersten Testszenarios, des mindestens einen weiteren Testszenarios, der entsprechenden Testergebnisse und/oder anderer zugehöriger Daten auf einer Anzeigeeinheit,
- Speichern des mindestens einen ersten Testszenarios, des mindestens einen weiteren Testszenarios, der entsprechenden Testergebnisse und/oder anderer zugehöriger Daten in einer Speichereinheit, und/oder
- Übermitteln des mindestens einen ersten Testszenarios, des mindestens einen weiteren Testszenarios, der entsprechenden Testergebnisse und/oder anderer zugehöriger Daten an eine Recheneinheit.

Dementsprechend können eine oder mehrere Maßnahmen nach der Bereitstellung der Ausgabedaten des erfindungsgemäßen Verfahrens eingeleitet werden. Die Maßnahmen können gleichzeitig, nacheinander oder auch stufenweise durchgeführt werden.

Als erstes kann das weitere Testszenario einem Nutzer oder einem Anwender auf einer Anzeigeeinheit einer Recheneinheit angezeigt werden. Weiterhin kann das weitere Testszenario gespeichert werden, das Testszenario selbst oder in Form einer entsprechenden Nachricht oder Mitteilung an eine andere Einheit, wie ein Endgerät, eine Steuereinheit oder sonstige Recheneinheit übertragen werden. Die empfangende Recheneinheit kann nach dem Empfang ebenfalls weitere entsprechende Maßnahmen einleiten. Weitere Maßnahmen sind beispielsweise Steuerungsmaßnahmen.

Beispielsweise kann eine Recheneinheit nach erfolgter Freigabe das weitere Testszenario oder eine Mitteilung über die Freigabe empfangen und in Abhängigkeit von dieser das technische System betreiben.

Dies hat den Vorteil, dass jegliche Maßnahmen auch zuverlässig und zeitnah umgesetzt werden.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
FIG 1 zeigt ein schematisches Ablaufdiagramm des erfindungsgemäßen Verfahrens.
FIG 2 zeigt eine schematische Ansicht des Closed-Loop-Ansatzes gemäß des erfindungsgemäßen Verfahrens.
FIG 3 zeigt eine schematische Ansicht eines ODDs gemäß einer Ausführungsform der Erfindung.
FIG 4 zeigt eine schematische Ansicht eines Suchraums gemäß einer Ausführungsform der Erfindung.
FIG 5 zeigt eine schematische Ansicht eines Suchraums eines ersten Testszenarios gemäß einer Ausführungsform der Erfindung.
FIG 6 zeigt eine schematische Ansicht eines Suchraums eines weiteren Testszenarios gemäß einer Ausführungsform der Erfindung.
FIG 7 zeigt eine schematische Ansicht eines Suchraums eines weiteren Testszenarios gemäß einer Ausführungsform der Erfindung.

### 5. Beschreibung der bevorzugten Ausführungsformen

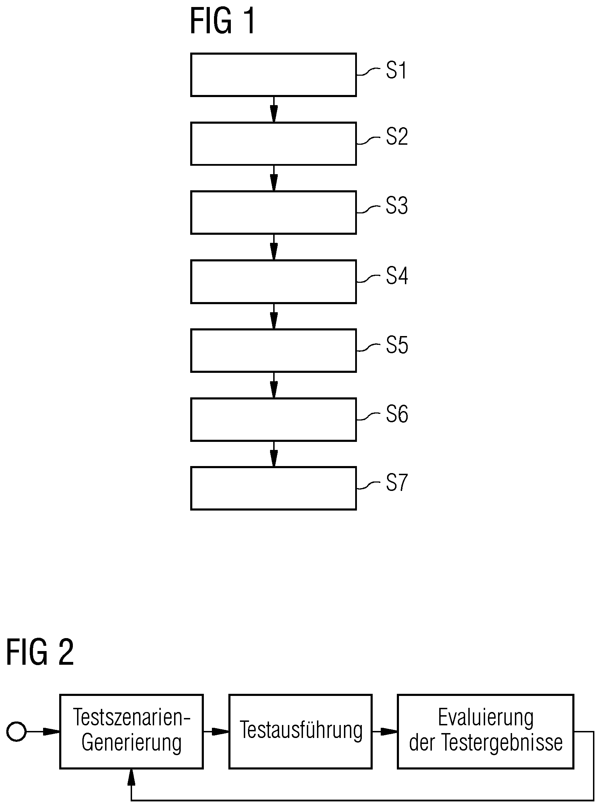

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S7 schematisch dar.

Figur 2 zeigt eine schematische Ansicht des Closed-Loop-Ansatzes gemäß des erfindungsgemäßen Verfahrens.

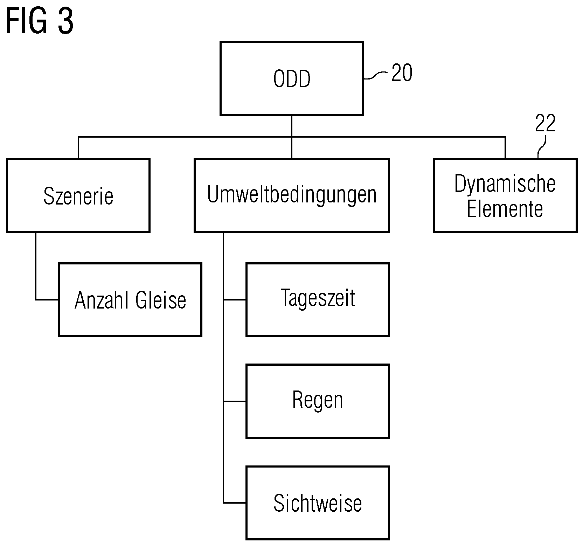

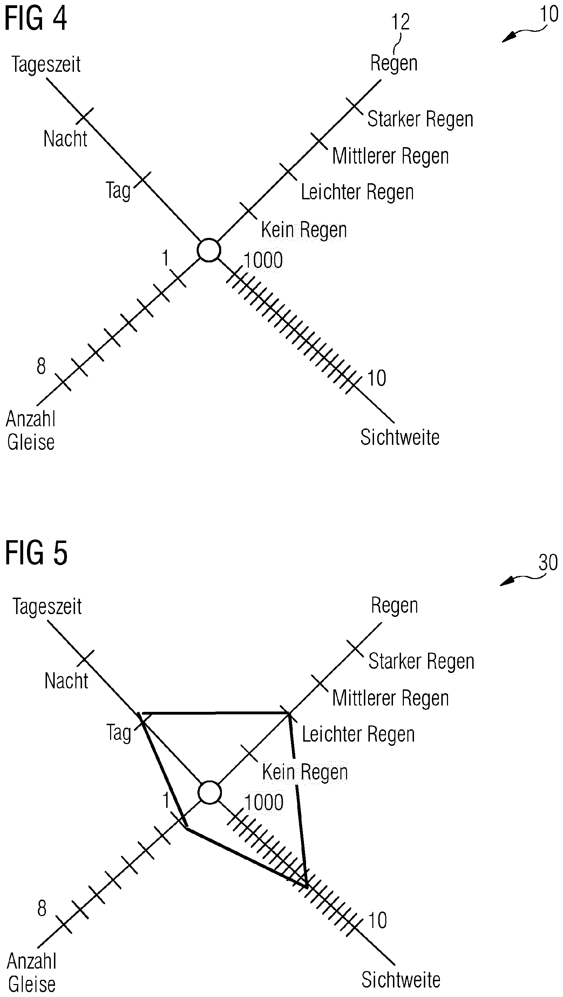

Figur 3 zeigt eine schematische Ansicht eines ODDs 20 gemäß einer Ausführungsform der Erfindung. Der ODD 20 spannt dabei den Suchraum 10 auf, welcher in Figur 4 gezeigt ist. Der Suchraum 10 ist bevorzugt n-dimensional, wobei n die Anzahl der Elemente 12 ist, die in dem ODD 20 definiert sind. Bei einem Suchraum 10 mit n Dimensionen 12, weist der ODD 20 mit anderen Worten auch n Elemente 22 auf. Das ODD 20 kann sich auf einen autonomen Zug beziehen, wie in den Figuren 3 und 4 dargestellt. In Figur 3 weist der ODD 20 vier Elemente 22 auf, nämlich die Tageszeit, den Regen, die Anzahl der Gleise und die Sichtweite. Jede Dimension 12 (Element des ODD 22) des Suchraums 10 kann durch eine Enumeration, eine ganze Zahl, eine reelle Zahl oder einen definierten Bereich angegeben werden. Falls der ODD 20 vier Elemente aufweist, weist der Suchraum 10 ebenfalls vier Dimensionen 12 auf. Während die Dimensionen 12 'Tageszeit' und 'Regen' durch Aufzählungen definiert werden können, kann die Dimension 'Anzahl Gleise' durch ganze Zahlen im Bereich [1; 8] und die Dimension 'Sichtweite' durch ganze Zahlen im Bereich von [1000; 10] Meter definiert werden.

### Generierung der Testszenarien, erstes Testszenario 30, S2

Ein Testszenario weist mindestens ein Element 22 des ODD 20 und bis zu alle Elemente 22 des ODD 20 auf. Bei vier Elementen 22 kann das Testszenario dementsprechend auch ein bis vier Elemente 22 aufweisen.

Dabei kann die Generierung der Testszenarien mit einem Zufallsszenario beginnen.

Figur 5 zeigt eine schematische Ansicht eines Suchraums eines ersten Testszenarios gemäß einer Ausführungsform der Erfindung. Das erste Testszenario 30 weist die zwei Elemente 22 des ODD 20 auf, leichter Regen und eine Sichtweite von 400 Metern.

### Testausführung S3

Das erste Testszenario 30 wird ausgeführt, beispielsweise mit Hilfe einer Simulation. Das erste Testszenario 30 kann als Eingabe für das technische System verwendet werden. Beispielsweise kann das erste Testszenario 30 durch generierte Bilderdaten oder Lidar-Daten in eine Objekterkennung/-klassifizierung eingespeist werden.

### Evaluierung der Testergebnisse S4

Die Ergebnisse der Testausführung können auch Testergebnisse genannt werden. Die Testergebnisse können beispielsweise als Liste der klassifizierten Objekte, Bounding Boxes, Segmentierungsmasken etc. vorliegen. Sie können mit Ground-Truth-Informationen verglichen werden. Die Ground-Truth-Informationen werden bevorzugt zusammen mit den Eingabedaten in der Phase der Generierung der Testszenarien generiert.

Anhand dieses Vergleichs kann geprüft werden, ob das technische System in dem gegebenen Testszenario korrekt arbeiten kann. Dies ist beispielsweise der Fall, wenn alle Objekte korrekt erkannt oder klassifiziert werden. Ist dies nicht der Fall, ist das Testszenario fehlgeschlagen.

### Generierung der Testszenarien, weiteres Testszenario 40, S5

Basierend auf den Testergebnissen der vorangegangenen Evaluierung werden weitere Testszenarien 40 generiert.

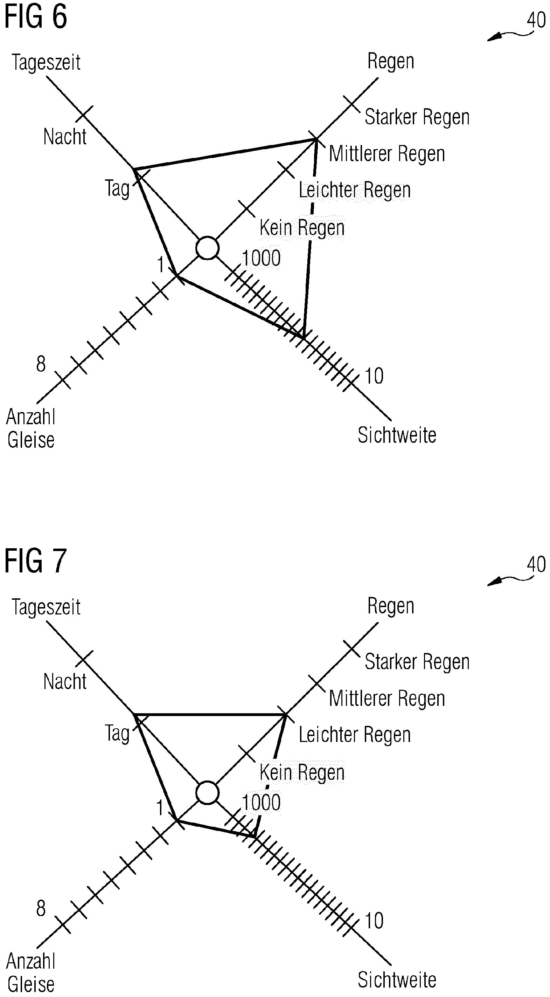

Falls die Testausführung erfolgreich war, wird ein weiteres Testszenario 40 generiert, das mindestens eine Dimension 12 des Suchraums 10 weiter untersucht, da der erfolgreiche Test zeigt, dass das technische System mit dem ersten Testszenario umgehen kann. Dabei kann eine andere Aufzählung der Dimension gewählt werden, der ganzzahlige Wert oder der reelle Wert erhöht werden. Dies führt zu komplexeren bzw. schwierigeren Testszenarien. In Figur 6 ist die Regenmenge von "leichtem Regen" auf "mittleren Regen" erhöht.

Falls die Testausführung hingegen fehlgeschlagen ist, wird ein weiteres Testszenario 40 generiert, das genau eine Dimension 12 des Suchraums 10 weiter untersucht. Dabei kann eine andere Aufzählung der Dimension gewählt, der ganzzahlige Wert oder der reelle Wert verringert werden. Dies führt zu vereinfachten oder einfacheren Testszenarien. In Figur 7 ist die Sichtweite auf 600 Meter festgelegt.

Bei der Testfallgenerierung kann bei den weiteren Testszenarien in jeder Iteration mindestens eine andere Dimension des Suchraums gewählt werden, die während der Testfallgenerierung geändert wird, um Schwingungen zu vermeiden. Weiterhin können die Schritte, in denen die Werte erhöht oder verringert werden, in jeder Iteration reduziert oder erhöht werden.

## Patentansprüche

1. Computer-implementiertes Verfahren zum Generieren von Testszenarien (30, 40) zum Testen von einem technischen System, umfassend die Schritte
a. Bereitstellen eines Suchraums (10) (S1); wobei
der Suchraum (10) durch einen Betriebs-Design-Bereich (20), ODD, definiert ist; wobei der Betriebs-Design-Bereich (20) eine Mehrzahl von Elementen (22) aufweist; wobei das technische System in dem Betriebs-Design-Bereich (20) betrieben wird;
b. Generieren mindestens eines ersten Testszenarios (30) auf Basis des Suchraums (10) (S2); wobei
das mindestens eine erste Testszenario (30) mindestens ein erstes Element der Mehrzahl der Elemente des Betriebs-Design-Bereichs (20), ODD, aufweist; wobei das mindestens eine erste Testszenario (30) mindestens eine entsprechende Dimension (12) des Suchraums (10) untersucht;
c. Generieren mindestens eines zugehörigen ersten Testergebnisses durch Ausführen des mindestens einen ersten Testszenarios (30)(S3);
d. Evaluieren des mindestens einen zugehörigen ersten Testergebnisses (S4);
e. Generieren mindestens eines weiteren Testszenarios (40) auf Basis des Suchraums (10) unter Berücksichtigung der Evaluierung (S5);
f. Wiederholen der Schritte c. bis d. mit dem mindestens einen weiteren Testszenario (40) und e. bis der Suchraum (10) erschöpft ist (S6); und
g. Bereitstellen des mindestens einen ersten Testszenarios (30), des mindestens einen weiteren Testszenarios (40) und/oder der entsprechenden Testergebnisse (S7).

2. Computer-implementiertes Verfahren nach Anspruch 1, wobei der Suchraum (10) mehrere Dimensionen (12) aufweist und/oder die Anzahl der Dimensionen (12) mit der Anzahl der Elemente (22) des Betriebs-Design-Bereichs (20), ODD, übereinstimmt.

3. Computer-implementiertes Verfahren nach Anspruch 2, wobei jede Dimension (12) durch eine Aufzählung, eine Ganzzahl, eine Zahl, eine reelle Zahl oder einen Bereich definiert ist.

4. Computer-implementiertes Verfahren nach einem der vorhergehenden Ansprüche, wobei das Ausführen des mindestens einen ersten Testszenarios (30) und/oder das Ausführen des mindestens einen weiteren Testszenarios (40), jeweils das Anwenden des mindestens einen ersten Testszenarios (30) auf das technische System und/oder das Anwenden des mindestens einen weiteren Testszenarios (40) auf das technische System umfasst.

5. Computer-implementiertes Verfahren nach einem der vorhergehenden Ansprüche, wobei das Evaluieren des mindestens einen ersten Testergebnisses und/oder des mindestens einen weiteren Testergebnisses weiterhin aufweist
- Vergleichen des mindestens einen ersten Testergebnisses und/oder des mindestens einen weiteren Testergebnisses mit mindestens einem erwarteten Testergebnis; und
- Bestimmen, ob das technische System in dem mindestens einen ersten Testszenario (30) und/oder mindestens einen weiteren Testszenario (40) unter Berücksichtigung des Vergleichs richtig betrieben wird.

6. Computer-implementiertes Verfahren nach Anspruch 5, wobei das technische System in dem mindestens einen ersten Testszenario (30) und/oder mindestens einen weiteren Testszenario (40) richtig betrieben wird und/oder die Ausführung des mindestens einen Testszenarios (30) erfolgreich war, falls das mindestens eine erste Testergebnis und/oder das mindestens eine weitere Testergebnis mit dem erwarteten Testergebnis vollständig oder zumindest teilweise übereinstimmt.

7. Computer-implementiertes Verfahren nach einem der vorhergehenden Ansprüche, wobei das mindestens eine weitere Testszenario (40) mindestens ein weiteres Element der Mehrzahl der Elemente des Betriebs-Design-Bereichs (20) aufweist bei erfolgreicher Ausführung des mindestens einen ersten (30) oder weiteren Testszenarios (40); wobei
das weitere Testszenario(40) mindestens eine weitere Dimension des Suchraums (10) untersucht.

8. Computer-implementiertes Verfahren nach einem der vorhergehenden Ansprüche, wobei das mindestens eine weitere Testszenario (40) ein weiteres Element der Mehrzahl der Elemente des Betriebs-Design-Bereichs (20) aufweist bei fehlgeschlagener Ausführung des mindestens einen ersten (30) oder weiteren Testszenarios (40); wobei
das weitere Testszenario (40) genau eine Dimension des Suchraums (10) untersucht; wobei sich das mindestens eine Element des ersten Testszenarios (30) oder weiteren Testszenarios (40) vom weiteren Element unterscheidet.

9. Computer-implementiertes Verfahren nach einem der vorhergehenden Ansprüche, weiterhin aufweisend Freigeben des technischen Systems für den Betrieb und/oder Verwerfen in Abhängigkeit des mindestens einen ersten Testszenarios (30), des mindestens einen weiteren Testszenarios (40) und/oder der entsprechenden Testergebnisse.

10. Computer-implementiertes Verfahren nach einem der vorhergehenden Ansprüche, weiterhin aufweisend
- Ausgeben des mindestens einen ersten Testszenarios (30), des mindestens einen weiteren Testszenarios (40), der entsprechenden Testergebnisse und/oder anderer zugehöriger Daten auf einer Anzeigeeinheit,
- Speichern des mindestens einen ersten Testszenarios (30), des mindestens einen weiteren Testszenarios (40), der entsprechenden Testergebnisse und/oder anderer zugehöriger Daten in einer Speichereinheit, und/oder
- Übermitteln des mindestens einen ersten Testszenarios (30), des mindestens einen weiteren Testszenarios (40), der entsprechenden Testergebnisse und/oder anderer zugehöriger Daten an eine Recheneinheit.

11. Technisches System zum Durchführen des Verfahrens nach einem der vorhergehenden Ansprüche.

12. Computerprogrammprodukt mit einem Computerprogramm, das Mittel zur Durchführung des Verfahrens nach einem der Ansprüche 1 bis 10 aufweist, wenn das Computerprogramm auf einer programmgesteuerten Einrichtung zur Ausführung gebracht wird.
